# EUROPEAN PATENT APPLICATION

(11) **EP 4 729 223 A1**
(43) Date of publication of application: **22.04.2026**
(21) Application number: 24823046.8
(22) Date of filing: 11.03.2024
(51) Int. Cl.: B23K 10/00, B23K 7/06, B23K 7/10, B23K 9/013, B23K 9/32, B23K 15/00, B23K 26/142, B23K 26/364, B23K 37/02

(54) **PROCESSING MACHINE AND PROCESSING METHOD**

(30) Priority: 15.06.2023 JP 2023098275
(71) Applicant: KAWASAKI JUKOGYO KABUSHIKI KAISHA, Kobe-shi, Hyogo 650-8670 (JP)
(72) Inventor: ODA, Wataru, Hyogo 650-8670 (JP); KOZUKI, Takanori, Hyogo 650-8670 (JP); MIGITA, Tatsuya, Hyogo 650-8670 (JP); IKEZAWA, Yukio, Hyogo 650-8670 (JP)
(74) Representative: Arnold & Siedsma
(86) International application number: PCT/JP2024/009304
(87) International publication number: WO 2024/257423

(57) **Abstract**

A processing machine includes: a processing machine main body movable relative to a workpiece; a torch that is secured to the processing machine main body and that generates a heat source between a tip of the torch and a portion of the workpiece that is to be processed; and a spray that ejects a spray material toward a first surface of the workpiece that faces the torch to remove dross deposited on a predetermined zone due to the thermal processing. The torch is tilted such that the tip of the torch is located ahead of an opposite end of the torch in a movement direction in which the processing machine main body moves relative to the workpiece during the thermal processing. An outlet of the spray is located in a direction in which the first surface of the workpiece faces, and is located ahead of the tip of the torch in the movement direction. The spray ejects the spray material forward in the movement direction. The processing machine forms a groove on the first surface of the workpiece by performing the thermal processing while moving the processing machine main body.

## Description

### Technical Field

The present disclosure relates to a processing machine and a processing method for thermal processing of workpieces.

### Background Art

To form a groove in a workpiece or cut the workpiece, the workpiece is subjected to thermal processing such as plasma processing. In the thermal processing, machining of the workpiece is performed by generating a heat source such as plasma between the tip of a torch and the portion of the workpiece that is to be processed.

In such thermal processing, metal debris cut out from the workpiece becomes molten metal called "dross", which is deposited on the front or back side of the workpiece. The dross deposited on the workpiece rapidly cools and adheres to the workpiece. Removing the adhered dross from the workpiece after the thermal processing is cumbersome, leading to reduced productivity. In addition, the adhesion of dross to the workpiece might hinder stable continuation of the thermal processing.

To address the problem of dross deposition, for example, Patent Literature 1 discloses a configuration in which, prior to the start of plasma cutting, a dross adhesion inhibitor is sprayed toward the to-be-cut portion of the workpiece surface that faces a plasma torch.

### Citation List

### Patent Literature

PTL 1: Japanese Examined Utility Model Application Publication No. H7-26054

### Summary of Invention

### Technical Problem

Spraying a dross adhesion inhibitor toward a workpiece before thermal processing is expected to reduce adhesion of dross to the workpiece. However, the problem of dross deposition on the front or back side of the workpiece remains unsolved. Thus, there is still room for improvement with respect to removal of dross in thermal processing.

It is therefore an object of the present disclosure to provide a processing machine and a processing method that can prevent dross deposition on a workpiece during thermal processing.

### Solution to Problem

A processing machine according to one aspect of the present disclosure is a processing machine for thermal processing of a workpiece, the processing machine including: a processing machine main body movable relative to the workpiece; a torch that is secured to the processing machine main body and that generates a heat source between a tip of the torch and a portion of the workpiece that is to be processed; and a spray that ejects a spray material toward a first surface of the workpiece that faces the torch to remove dross deposited on a predetermined zone due to the thermal processing, wherein the torch is tilted such that the tip of the torch is located ahead of an opposite end of the torch in a movement direction in which the processing machine main body moves relative to the workpiece during the thermal processing, an outlet of the spray is located in a direction in which the first surface of the workpiece faces, the outlet of the spray is located ahead of the tip of the torch in the movement direction, the spray ejects the spray material forward in the movement direction, and the processing machine forms a groove on the first surface of the workpiece by performing the thermal processing while moving the processing machine main body.

A processing machine according to another aspect of the present disclosure is a processing machine for thermal processing of a workpiece, the processing machine including: a processing machine main body; a torch that is secured to the processing machine main body and that generates a heat source between a tip of the torch and a portion of the workpiece that is to be processed; and a spray that ejects a spray material toward a predetermined zone to remove dross deposited on the predetermined zone due to the thermal processing, the predetermined zone being defined on a surface of the workpiece based on the to-be-processed portion of the workpiece, the surface of the workpiece being a surface that is other than a first surface facing the torch and that intersects an imaginary straight line extending from the tip of the torch toward the to-be-processed potion of the workpiece.

A processing method according to another aspect of the present disclosure is a processing method for thermal processing of a workpiece, the processing method including: holding a torch that generates a heat source between a tip of the torch and a portion of the workpiece that is to be processed, with the torch directed toward the to-be-processed portion of the workpiece; performing the thermal processing on the to-be-processed portion of the workpiece by generating the heat source, and simultaneously ejecting a spray material toward a first surface of the workpiece that faces the torch to remove dross deposited on a predetermined zone due to the thermal processing; forming a groove on the first surface of the workpiece by performing the thermal processing while moving the torch relative to the workpiece; and ejecting the spray material from a location that is in a direction in which the first surface of the workpiece faces and that is ahead of the tip of the torch in a movement direction in which the torch moves relative to the workpiece, wherein the spray material is ejected forward in the movement direction.

A processing method according to another aspect of the present disclosure is a processing method for thermal processing of a workpiece, the processing method including: holding a torch that generates a heat source between a tip of the torch and a portion of the workpiece that is to be processed, with the torch directed toward the to-be-processed portion of the workpiece; and performing the thermal processing on the to-be-processed portion of the workpiece by generating the heat source, and simultaneously ejecting a spray material toward a predetermined zone to remove dross deposited on the predetermined zone due to the thermal processing, the predetermined zone being defined on a surface of the workpiece based on the to-be-processed portion of the workpiece, the surface of the workpiece being a surface that is other than a first surface facing the torch and that intersects an imaginary straight line extending from the tip of the torch toward the to-be-processed potion of the workpiece.

### Advantageous Effects of Invention

According to the present disclosure, dross deposition on a workpiece can be prevented during thermal processing.

### Brief Description of Drawings

FIG. 1 is a front view showing a schematic configuration of a processing machine according to a first embodiment of the present disclosure.
FIG. 2 is a side view of the processing machine shown in FIG. 1.
FIG. 3 is an enlarged plan view showing a torch and its vicinity in the processing machine shown in FIG. 1.
FIG. 4 is a front view showing a schematic configuration of a processing machine according to a second embodiment of the present disclosure.
FIG. 5 is an enlarged plan view showing a to-be-processed portion and its vicinity in the processing machine shown in FIG. 4.
FIG. 6 shows a schematic configuration of a processing machine according to a variant of the second embodiment as viewed in a direction in which a processing machine main body moves relative to a workpiece.
FIG. 7 is a plan view of the processing machine shown in FIG. 6.
FIG. 8 is a plan view showing a schematic configuration of a processing machine according to a variant of the present disclosure.

### Description of Embodiments

### [First embodiment]

Hereinafter, a processing machine according to a first embodiment of the present disclosure will be described.

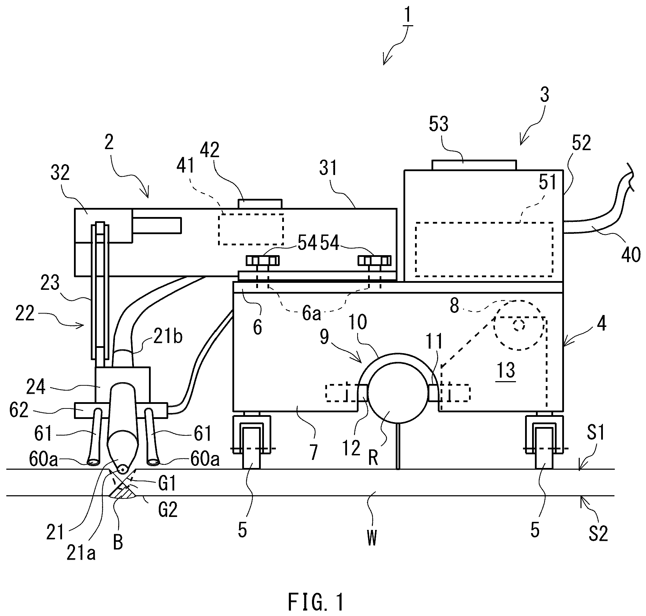

FIG. 1 is a front view showing a schematic configuration of the processing machine according to the first embodiment of the present disclosure. The processing machine 1 is a working machine that performs a groove-forming process as thermal processing. The groove-forming process is a process for forming a groove G2 on the back side of a weld portion B of a workpiece W. In general, this groove-forming process is referred to as "gouging". A weld groove G1 having any shape such as a V, X, U, or J shape has been formed in advance in the workpiece W. After welding is performed on the weld groove G1 on the front side of the workpiece W, the back side of the workpiece W is subjected to the groove-forming process to form the groove G2, which is deeper than the weld groove G1. As a result, defective potions of the weld bead formed by the welding on the front side can be removed. This prevents welding failure during welding on the back side. In some cases, the weld groove G1 is not formed in advance in the workpiece W. The groove-forming process can also be performed on the workpiece W without any weld groove G1. That is, in the present disclosure, thermal processing of the workpiece W is not limited to thermal processing performed on the weld groove G1, but encompasses thermal processing performed on a portion with no weld groove G1.

In FIG. 1, the workpiece W, which is the subject of welding, is horizontally positioned, and the processing machine 1 is placed on a first surface S1 of the workpiece W. In the following description, a portion of the processing machine 1 that is relatively far from the first surface S1 of the workpiece W is an "upper" portion, while a portion of the processing machine 1 that is relatively near the first surface S1 of the workpiece W is a "lower" portion. The first surface S1 of the workpiece W is the surface with which the processing machine 1 is in contact, namely, the surface that faces a torch 21 described later. The surface of the workpiece W on which the weld portion B, that is, a weld bead, has been formed, is a second surface S2 opposite to the first surface S1.

In the present embodiment, the processing machine 1 includes a processing machine main body 2 and a carriage 3. The carriage 3 includes a carriage main body 4 and wheels 5 supported by the carriage main body 4. The carriage main body 4 includes a securing surface 6 to which the processing machine main body 2 is secured. The carriage main body 4 includes an enclosure 7 having a rectangular parallelepiped shape. The upper surface of the enclosure 7 serves as the securing surface 6. The wheels 5 are in contact with the first surface S1 of the workpiece W.

The carriage 3 includes a motor 8 for moving the carriage main body 4 on the first surface S1 of the workpiece W. The motor 8 is located within the enclosure 7. The motor 8 is supplied with electric power from an external source through a power cable 40. Alternatively, the carriage 3 may be equipped with a battery.

In the present embodiment, a rail R is secured to the first surface S1 of the workpiece W along a welding line. The securing of the rail R is not limited to using particular means. For example, the rail R may be secured to the workpiece W by welding or by means of a magnet or a vacuum pad. The rail R is circular in cross-section. For example, the rail R is a pipe rail. The carriage main body 4 includes a rail holder 9 that holds the rail R. The enclosure 7 includes a recess 10 in its lower surface which is opposite to the securing surface 6, and the rail R is inserted into the recess 10. The recess 10 is arc-shaped in cross-section. The rail holder 9 is located around the recess 10.

The rail holder 9 includes a pair of rollers between which the rail R is held. The pair of rollers includes a drive roller 11 actuated by the motor 8 and a driven roller 12 opposed to the drive roller 11. The carriage main body 4 includes a link 13 that transmits drive power of the motor 8 to the drive roller 11 to rotate the drive roller 11. The link 13 includes, for example, a gear box. The rail holder 9 is not limited to this configuration. For example, the rail holder 9 may include an auxiliary roller in addition to the pair of rollers.

As described above, in the present embodiment, the drive roller 11 is rotated by the drive power of the motor 8, with the rail R held between the pair of rollers 11 and 12. This rotation causes the carriage 3 to move along the rail R. Accordingly, the carriage 3 moves along the welding line of the workpiece W relative to the workpiece W. During this movement, the wheels 5 rotate in contact with the workpiece W. Since the carriage 3 is held on the rail R with the aid of the rail holder 9, the carriage 3 can be moved along the rail R to perform thermal processing on the workpiece W by the processing machine main body 2 mounted on the carriage 3, not only when the surface of the workpiece W faces upward but also when the surface of the workpiece W faces laterally or downward. The workpiece W may have a curved surface in addition to a flat surface.

A case 52 is secured to a portion of the securing surface 6 of the carriage main body 4. A movement controller 51 is mounted on the case 52. The carriage 3 includes a control panel 53 located on the upper surface of the case 52 to operate the carriage 3. The movement controller 51 includes processing circuitry and controls the motor 8.

The processing machine main body 2 is detachably secured to the securing surface 6. The securing surface 6 includes securing holes 6a. The processing machine main body 2 is secured to the securing surface 6 by securing screws 54 inserted into the securing holes 6a. The processing machine main body 2 can be removed from the securing surface 6 of the carriage main body 4 by loosening the securing screws 54.

Instead of the processing machine main body 2, other working machines can be secured to the securing surface 6. Thus, the same carriage 3 can be used for different types of working machines, including the processing machine main body 2 configured as the processing machine 1. Examples of the other working machines include a welding machine that performs welding while moving a welding torch, an inspection machine that performs an inspection before or after welding or any other process, and a processing machine that performs a process other than the groove-forming process. For example, after the groove-forming process to form the groove G2 is performed by the processing machine 1, the processing machine main body 2 may be removed from the securing surface 6, and an inspection machine may be secured to the securing surface 6. By moving the carriage 3 with the secured inspection machine along the rail R, the groove G2 formed by the processing machine 1 can be inspected. Replacement of the processing machine main body 2 with the inspection machine can be performed while the carriage 3 is holding the rail R.

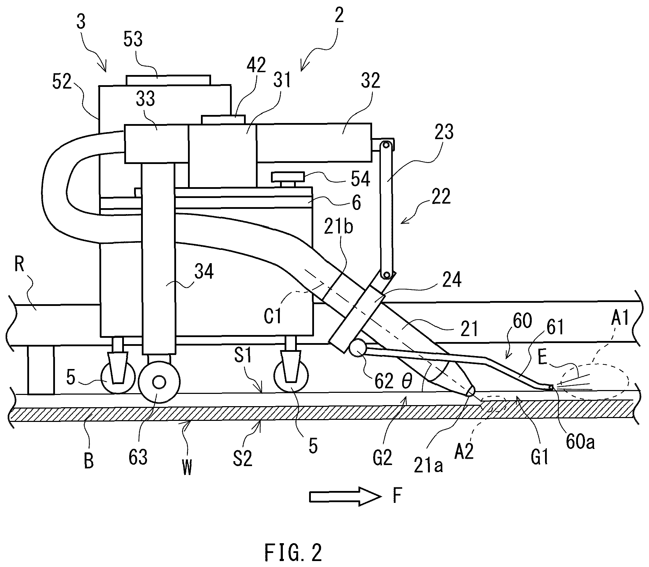

FIG. 2 is a side view of the processing machine shown in FIG. 1. The processing machine 1 includes a torch 21 that performs thermal processing on the workpiece W. In the present embodiment, the torch 21 is a plasma torch that generates a plasma arc as a heat source between a tip 21a of the torch 21 and a to-be-processed portion A2 of the workpiece W.

The processing machine main body 2 includes a driver 41 that drives the torch 21. The driver 41 receives electric power from a power source, converts the received electric power to a given voltage or current, and supplies the voltage or current to an electrode in the torch 21, thereby allowing the torch 21 to generate a plasma arc as a heat source between its tip 21a and the to-be-processed portion A2 of the workpiece W. The power source may be a battery mounted on the processing machine main body 2. Alternatively, electric power may be supplied from an external source to the processing machine main body 2 through a power cable. One and the same power source may be used for both the carriage 3 and the processing machine main body 2. The driver 41 includes processing circuitry including an inverter. The processing machine main body 2 further includes a control panel 42. The driver 41 drives the torch 21 based on operations performed on the control panel 42.

The processing machine main body 2 includes a holder 22 that holds the torch 21 on the carriage 3. The torch 21 is tilted such that its tip 21a is located ahead of its opposite end 21b in a movement direction F in which the processing machine main body 2 moves relative to the workpiece W during thermal processing. The holder 22 retains the torch 21 in this tilted position. The tilt angle θ of a central axis C1 of the torch 21 relative to the first surface S1 of the workpiece W may be, for example, but is not limited to, 30°.

The processing machine main body 2 includes a first main body 31 secured to the securing surface 6 and a second main body 32 extending forward from the first main body 31. The second main body 32 is configured to move relative to the first main body 31 in the width direction. The holder 22 includes an arm 23 supported by the second main body 32 and a clamp 24 that is supported by the arm 23 and holds the torch 21. The holder 22 is configured to adjust the tilt angle θ and the torch height of the torch 21. The torch height is defined as the distance from the first surface S1 of the workpiece W to the tip 21a of the torch 21.

With this configuration, the processing machine 1 of the present embodiment moves the processing machine main body 2 with the secured torch 21 relative to the workpiece W and generates a plasma arc between the tip 21a of the torch 21 and the to-be-processed portion A2 of the workpiece W, thereby performing thermal processing to form the groove G2 on the first surface S1 of the workpiece W.

In the present embodiment, the processing machine 1 includes a spray 60 that ejects a spray material E. The spray 60 ejects the spray material E toward the first surface S1 of the workpiece W that faces the torch 21. The spray 60 is directed toward a predetermined zone A1 defined on the first surface S1 of the workpiece W based on the to-be-processed portion A2 of the workpiece W. The spray 60 includes an outlet 60a, which is located in the direction in which the first surface S1 of the workpiece W faces. The outlet 60a is located ahead of the tip 21a of the torch 21 in the movement direction F. The spray 60 is positioned such that the outlet 60a at its tip is located ahead of its opposite end. Thus, the spray 60 ejects the spray material E forward in the movement direction F. The outlet 60a is located such that the distance to the first surface S1 of the workpiece W is equal to or less than a predetermined distance. Furthermore, the outlet 60a is oriented such that the direction of ejection of the spray material E is horizontal or nearly horizontal with respect to the first surface S1 of the workpiece W.

The spray 60 is secured to the processing machine main body 2. In the present embodiment, the spray 60 is held by the holder 22. The spray 60 includes a pair of left and right nozzles 61 located to the left and right of the torch 21. The distance between the pair of nozzles 61 is greater than the width of the weld groove, or the width of the groove G2 formed by the torch 21. The nozzles 61 are connected to a supply tube 62 through which the spray material is supplied. The supply tube 62 is secured to the clamp 24 of the holder 22.

As described above, in the present embodiment, the holder that holds the torch 21 and the holder that holds the spray 60 are the same, or are integrated with each other. Accordingly, the positional relationship between the torch 21 and the spray 60 can be maintained even when the position of the torch 21 is adjusted, for example, by moving the second main body 32 relative to the first main body 31 in the width direction. Alternatively, the holder that holds the torch 21 and the holder that holds the spray 60 may be configured independently of each other.

The outlet 60a of the spray 60 has a shape extending longitudinally in a direction parallel to the surface of the workpiece W, namely, in the width direction of the weld groove. For example, the outlet 60a may have an oval or elliptic shape extending longitudinally from left to right. For example, each nozzle 61 may be a cylindrical pipe, with its tip vertically pressed such that the tip of the nozzle 61 forms the outlet 60a. Alternatively, the outlet 60a having an oval or elliptic shape extending longitudinally in the width direction of the weld groove may be attached to the tip of the nozzle 61 shaped as a cylindrical pipe.

The spray material E ejected from the spray 60 may be, for example, a gas. The gas contains, for example, an inert gas such as argon or nitrogen. The use of an inert gas can prevent oxidation of the workpiece W sprayed with the spray material E. The gas is not limited to inert gases and may be another type of gas such as oxygen or air in order to achieve the removal of dross. The spray material E is not limited to gases and may be a liquid or a solid. For example, the spray material E may be water, an abrasive material such as sand, or dry ice.

In the present embodiment, the processing machine 1 further includes a tracking roller 63. The tracking roller 63 is supported by the processing machine main body 2. The processing machine main body 2 includes a third main body 33 extending rearward from the first main body 31 and a fourth main body 34 extending downward from the third main body 33. The tracking roller 63 is supported by the lower end of the fourth main body 34. The tracking roller 63 is positioned such that the center of its width is in alignment with the center of the width of the torch 21. The tracking roller 63 allows the processing machine main body 2 to track the groove G2 formed behind the torch 21 in the movement direction F. For this purpose, the height of the tracking roller 63 is set such that the tracking roller 63 is located in the groove G2 of the workpiece W. That is, the lowermost end of the tracking roller 63 is located below the lowermost ends of the wheels 5.

By virtue of including the tracking roller 63, the processing machine 1 can reliably track the groove G2 actually formed. Accordingly, the processing machine 1 can move stably on the workpiece W. This can facilitate automation of the groove-forming process.

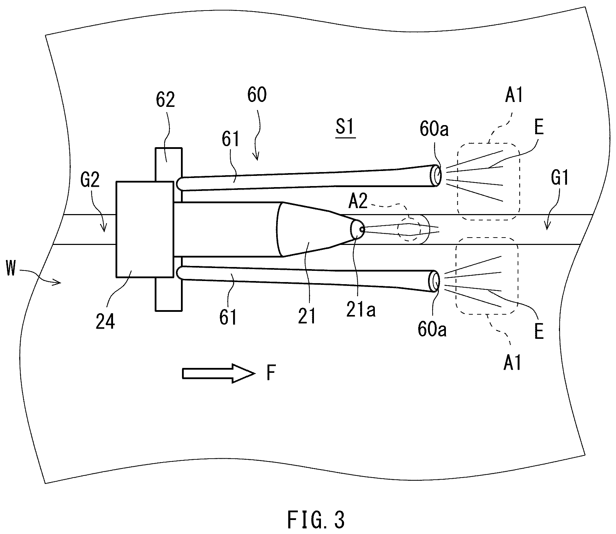

FIG. 3 is an enlarged plan view showing the torch and its vicinity in the processing machine shown in FIG. 1. In FIG. 3, components of the processing machine 1 other than the torch 21, the clamp 24, and the spray 60 are omitted. As previously described, the torch 21 is tilted such that the tip 21a is located ahead of the opposite end 21b. Thus, as shown in FIG. 3, the to-be-processed portion A2 of the workpiece W is located ahead of the tip 21a of the torch 21. That is, a plasma arc is formed between the tip 21a of the torch 21 and the weld groove of the workpiece W which is located ahead of the tip 21a of the torch 21.

In this state, the processing machine 1, including the torch 21, moves in the movement direction F relative to the workpiece W. The plasma arc melts part of the to-be-processed portion A2 of the workpiece W into dross. The dross is blown forward by the plasma arc. The blown dross is deposited or about to be deposited ahead of the to-be-processed portion A2 and on both sides of the weld groove of the first surface S1 of the workpiece W. The region where the dross is deposited or about to be deposited is defined as the predetermined zone A1. For example, the predetermined zone A1 is defined as a zone including the edges of the weld groove G1, namely, the edges of the formed groove G2. The spray 60 ejects the spray material E toward the predetermined zone A1 defined in this manner. In other words, the location from which the spray material E is ejected is in the direction in which the first surface S1 of the workpiece W faces and is ahead of the tip 21a of the torch 21 in the movement direction F in which the torch 21 moves relative to the workpiece W, and the spray material E is ejected forward in the movement direction.

As a result of ejection of the spray material E from the spray 60 toward the predetermined zone A1, the dross approaching the predetermined zone A1 is further blown forward. Even when dross is deposited on a site within the predetermined zone A1, the dross is blown off by the spray material E before cooling on and adhering to that site of the workpiece W. Accordingly, by ejecting the spray material E toward the first surface S1 of the workpiece W while performing thermal processing on the to-be-processed portion A2 of the workpiece W, dross deposition on the first surface S1 of the workpiece W during the groove-forming process can be prevented.

The prevention of dross deposition on the first surface S1 of the workpiece W during the groove-forming process ensures stable quality of the groove-forming process and facilitates automation of the groove-forming process. If dross is deposited on the first surface S1 of the workpiece W, in particular at the edges of the weld groove G1, during the groove-forming process, the torch 21 might contact the dross, potentially being damaged or failing to generate a desired plasma arc. In addition, a plasma arc, which is to be generated between the tip 21a of the torch 21 and the to-be-processed portion A2 of the workpiece W, might instead occur between the tip 21a of the torch 21 and the dross. This phenomenon is generally called "double arc". The occurrence of double arc could reduce or extinguish the plasma arc generated between the tip 21a of the torch 21 and the to-be-processed portion A2 of the workpiece W. This could result in failure of the groove-forming process.

If dross is deposited on the first surface S1 of the workpiece W, in particular at the edges of the formed groove G2, the deposited dross could interfere with the tracking roller 63. The interference of the dross with the tracking roller 63 could increase resistance to the movement of the processing machine 1, making the movement of the processing machine 1 difficult. This could preclude the processing machine 1 from continuing the groove-forming process while moving.

According to the present embodiment, the problems associated with dross deposition on the first surface S1 of the workpiece W can be solved. Hence, the quality of the groove-forming process performed by the processing machine 1 can be stabilized. In addition, automation of the groove-forming process performed by the processing machine 1 can be facilitated.

In the present embodiment, the outlet 60a of the spray 60 is located in the direction in which the first surface S1 of the workpiece W faces and positioned ahead of the tip 21a of the torch 21 in the movement direction F, and the spray 60 is configured to eject the spray material E forward in the movement direction F. This prevents interference between the nozzle 61 of the spray 60 and the plasma arc, between the spray material E ejected from the outlet 60a and the plasma arc, or between dross blown off by the spray material E and the plasma arc. Accordingly, dross removal can be accomplished without affecting the groove-forming process.

In the present embodiment, the outlet 60a of the spray 60 has a shape extending longitudinally in a direction parallel to the surface of the workpiece W. Thus, the speed of the spray material E ejected from the outlet 60a can be increased. In addition, the spray material E can be ejected over a wide range in the width direction.

Preferably, the outlet 60a is located behind the predetermined zone A1 in the movement direction F. This prevents interference between the nozzle 61 of the spray 60 and dross. In the present embodiment, the spray 60 includes a pair of left and right nozzles 61 located to the left and right of the torch 21. Accordingly, dross deposited to the left and right of the groove G2 on the first surface S1 can be efficiently blown off by the spray material E.

### [Variants of first embodiment]

Although the first embodiment illustrates an example in which the spray 60 includes a pair of left and right nozzles 61, the configuration of the spray 60 is not limited to that described above. The spray 60 may be configured in any manner, provided that the spray 60 can eject the spray material E toward the predetermined zone A1 defined based on the to-be-processed portion A2 of the workpiece W. For example, although one left nozzle 61 and one right nozzle 61 are arranged in the first embodiment, two or more left nozzles and two or more right nozzles may be employed. The nozzles may be arranged side by side in the width direction or may be arranged one above another in the height direction.

One or more nozzles may be located above the torch 21. Also in this case, each outlet 60a can be located ahead of the tip 21a of the torch 21 in the movement direction F, and the spray material E can be ejected forward in the movement direction F. Alternatively, multiple nozzles arranged in an arc of a circle concentric with the torch 21 may be located above the torch 21. Alternatively, a nozzle formed in an arc shape may be located above the torch 21.

Although the first embodiment illustrates an example in which the outlets 60a at the tips of the pair of left and right nozzles 61 are directed forward in the movement direction F, this configuration is not limiting. For example, each outlet 60a may be directed obliquely forward in the movement direction F. That is, the direction in which each outlet 60a faces may have a component in the width or height direction in addition to a forward component in the movement direction F. In the case where two or more left nozzles and two or more right nozzles are employed, the two or more nozzles on each side may extend radially, or the outlets of the two or more nozzles on each side may be directed radially.

Although the first embodiment illustrates a configuration in which the processing machine 1 includes the tracking roller 63, the processing machine 1 need not include the tracking roller 63. In addition, the processing machine main body 2 may be undetachable from the carriage 3. That is, even a processing machine 1 dedicated exclusively to a groove-forming process can adopt the dross-removing configuration of the first embodiment.

Although the first embodiment illustrates an example in which the carriage 3 is controlled by the movement controller 51 and the torch 21 is driven by the driver 41, this configuration is not limiting. For example, the movement controller 51 and the driver 41 may be communicatively connected to each other. Furthermore, the driver 41 may control the activation of the torch 21 based on command signals sent from the movement controller 51. For example, the torch 21 may be turned on and off according to the location of the moving carriage 3.

Although the above embodiment illustrates an example in which the control panel 53 for operating the carriage 3 is included in the carriage 3 and the control panel 42 for operating the processing machine main body 2 is included in the processing machine main body 2, this configuration is not limiting. For example, the carriage 3 or the processing machine main body 2 may include a common control panel for operating both the carriage 3 and the torch 21. Alternatively, a remote control terminal for remotely operating the carriage 3 or the processing machine main body 2 may be provided separately from the main body of the processing machine 1. The remote control terminal is connected to the main body of the processing machine 1 by wire or wirelessly. In the case of wireless connection, the remote control terminal may be a communication terminal such as a smartphone capable of communication through a network such as the the Internet.

### [Second embodiment]

Hereinafter, a processing machine according to a second embodiment of the present disclosure will be described.

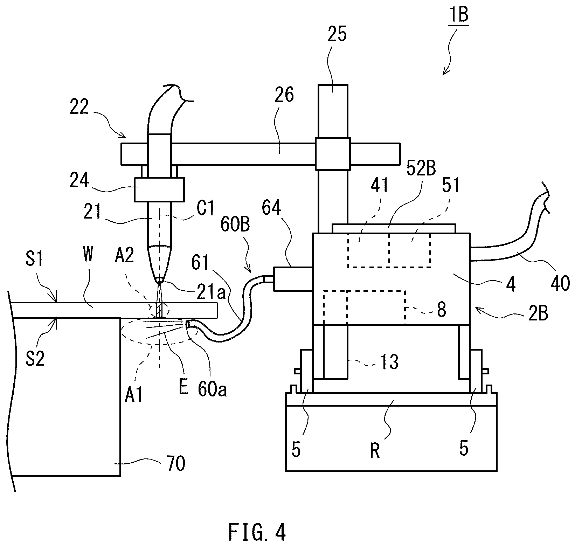

FIG. 4 is a front view showing a schematic configuration of the processing machine according to the second embodiment of the present disclosure. In FIG. 4, components that are the same as those of the processing machine 1 according to the first embodiment are denoted by the same reference signs, and a further description of these components may be omitted. The processing machine 1B of the present embodiment is a working machine that performs a hole-forming or cutting process as thermal processing of the workpiece W. In general, the hole-forming process is referred to as "piercing".

In the present embodiment, the processing machine 1B includes a processing machine main body 2B configured as a carriage. Specifically, the processing machine main body 2B includes a carriage main body 4 and wheels 5 supported by the carriage main body 4. The enclosure of the processing machine main body 2B is shared with the carriage main body 4. The wheels 5 are placed on a rail R.

In the present embodiment, as in the first embodiment, the processing machine 1B includes a torch 21 that performs thermal processing on the workpiece W. The torch 21 is a plasma torch that generates a plasma arc as a heat source between the tip 21a of the torch 21 and the to-be-processed portion A2 of the workpiece W.

The processing machine main body 2 includes a holder 22 that holds the torch 21 on the processing machine main body 2. The torch 21 is positioned perpendicular to the first surface S1 of the workpiece W placed on a workpiece table 70 such that the tip 21a faces the first surface S1. In other words, the torch 21 is positioned such that an imaginary straight line extending from the tip 21a of the torch 21 toward the to-be-processed portion A2 of the workpiece W intersects the first surface S1 of the workpiece and the second surface S2 opposite to the first surface S1. The imaginary straight line is an extension of the central axis C1 of the torch 21. In the present embodiment, the imaginary straight line is orthogonal to the first surface S1 and the second surface S2. The holder 22 includes a first main body 25, a second main body 26, and a clamp 24. The first main body 25 is supported by the carriage main body 4 and extends in the upward/downward direction. The second main body 26 is supported by the first main body 25 and extends in a direction orthogonal to the movement direction F, namely, in the width direction of the rail R. The clamp 24 is supported by the second main body 26 and holds the torch 21.

The second main body 26 may be movable in the upward/downward direction relative to the first main body 25. The clamp 24 may be movable in the width direction of the rail R relative to the second main body 26. In this case, the position of the tip of the clamp 24 can be adjusted.

The carriage main body 4 includes a motor 8 for moving the carriage main body 4 on the rail R. The motor 8 is located within the carriage main body 4. The motor 8 is supplied with electric power from an external source though a power cable 40. Alternatively, the carriage main body 4 may be equipped with a battery. The wheels 5 are rotated by drive power output from the motor 8, and this rotation causes the processing machine main body 2B to move along the rail R.

The processing machine main body 2B includes a movement controller 51 that controls the motor 8 and a driver 41 for driving the torch 21. The movement controller 51 and the driver 41 are located within the carriage main body 4. The movement controller 51 and the driver 41 may be configured together as single processing circuitry. A control panel 52B for operating the processing machine 1B is located on the upper surface of the carriage main body 4. Based on operation inputs to the control panel 52B, the movement controller 51 controls the movement of the processing machine main body 2B, and the driver 41 controls the activation of the torch 21.

The processing machine 1B of the present embodiment performs thermal processing to form a hole in the workpiece W by generating a plasma arc between the tip 21a of the torch 21 and the to-be-processed portion A2 of the workpiece W while keeping the processing machine main body 2 at rest. The processing machine 1B further performs thermal processing to cut the workpiece W by generating a plasma arc between the tip 21a of the torch 21 and the to-be-processed portion A2 of the workpiece W while moving the processing machine main body 2 relative to the workpiece W. In the case where the cutting process is started from the interior of the workpiece W, the hole-forming process is first performed with the processing machine main body 2 at rest, and then the cutting process is performed by moving the processing machine main body 2 from the position at which it was located during the hole-forming process.

In the present embodiment, the processing machine 1B includes a spray 60B. The spray 60B is supported by the processing machine main body 2. The spray 60B includes a nozzle 61 and a holder 64 that holds the nozzle 61. The holder 64 is secured to the carriage main body 4. In the present embodiment, the spray 60B includes an outlet 60a, which is positioned such that the spray material E is ejected around the second surface S2 of the workpiece W. The outlet 60a is located such that the distance to the second surface S2 of the workpiece W is equal to or less than a predetermined distance. Furthermore, the outlet 60a is oriented such that the direction of ejection of the spray material E is horizontal or nearly horizontal with respect to the second surface S2 of the workpiece W.

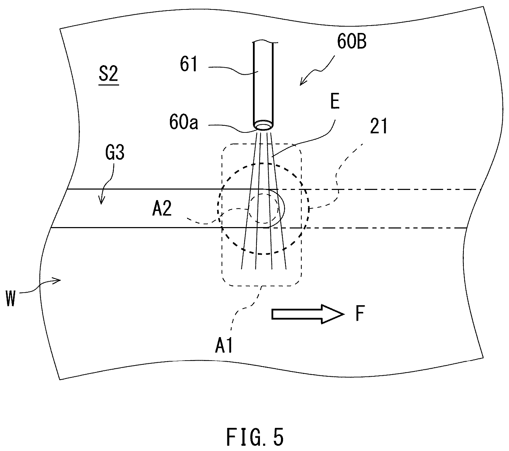

FIG. 5 is an enlarged plan view showing the portion to be processed by the processing machine shown in FIG. 4. FIG. 5 shows the to-be-processed portion A2 and its vicinity as viewed on the second surface S2 of the workpiece W. In FIG. 5, components of the processing machine 1B other than the torch 21 and the nozzle 61 of the spray 60B are omitted. As previously described, the torch 21 is positioned perpendicular to the first surface S1 of the workpiece W. Thus, as shown in FIG. 5, the to-be-processed portion A2 of the workpiece W is a region that is concentric with the tip 21a of the torch 21 when viewed in plan. That is, a plasma arc is formed between the tip 21a of the torch 21 and the portion of the workpiece W that is located directly beneath the tip 21a of the torch 21.

The plasma arc melts part of the to-be-processed portion A2 of the workpiece W into dross. In the thermal processing of the present embodiment, the plasma arc penetrates the entire thickness of the to-be-processed portion A2 of the workpiece W. Thus, the dross is deposited or about to be deposited around the to-be-processed portion A2 on the second surface S2 of the workpiece W. In the cutting process, the processing machine 1B, including the torch 21, moves in the movement direction F relative to the workpiece W. Accordingly, the to-be-processed portion A2 is shifted in the movement direction F along with the movement of the torch 21, and a cut G3 is formed in a region of the workpiece W over which the to-be-processed portion A2 has passed.

During this process, the dross is deposited or about to be deposited on one or both sides of the cut G3 on the second surface S2 of the workpiece W. The region where the dross is deposited or about to be deposited is defined as the predetermined zone A1. In the present embodiment, unlike the first embodiment, the torch 21 is not tilted. Accordingly, the predetermined zone A1 is defined as a zone including one or both edges of the cut G3 formed in the to-be-processed portion A2. When only the hole-forming process is performed, the predetermined zone A1 is likewise defined around the to-be-processed portion A2.

The spray 60B ejects the spray material E toward the predetermined zone A1 defined as described above. In the present embodiment, as shown in FIG. 4, the outlet 60a of the spray 60B is positioned such that the imaginary straight line extending from the tip 21a of the torch 21 toward the to-be-processed portion A2 of the workpiece W, namely, an extension of the central axis C1 of the torch 21, intersects the direction of ejection of the spray material E, namely, an extension of the central axis of the outlet 60a. Furthermore, as shown in FIG. 5, the outlet 60a of the spray 60B is positioned such that when viewed in a direction perpendicular to the first surface S1 or the second surface S2, the movement direction F in which the processing machine main body 2 moves relative to the workpiece W during the cutting process intersects the direction of ejection of the spray material E. In the present embodiment, the movement direction F and the direction of ejection of the spray material E are orthogonal.

As a result of ejection of the spray material E from the spray 60B toward the predetermined zone A1, dross generated around the predetermined zone A1 is blown sideways. Even when dross is deposited on a site within the predetermined zone A1, the dross is blown off by the spray material E before cooling on and adhering to that site of the workpiece W. Accordingly, by ejecting the spray material E toward the second surface S2 of the workpiece W while performing thermal processing on the to-be-processed portion A2 of the workpiece W, dross deposition on the second surface S2 of the workpiece W during the hole-forming or cutting process can be prevented.

**In** the present embodiment, the outlet 60a of the spray 60B is positioned such that the movement direction F in which the processing machine main body 2 moves relative to the workpiece W during the cutting process intersects the direction of ejection of the spray material E. Accordingly, when dross is deposited at both edges of the cut G3, the dross can be efficiently blown off from both edges at once even if the horizontal range over which the spray material E is ejected is narrow. In the present embodiment, the ejected spray material E or the blown-off dross may contact the plasma arc at or around the second surface S2 of the workpiece W. This does not cause any problem, as the portion of the plasma arc near the second surface S2 of the workpiece W does not influence the cutting of, or the hole formation in, the workpiece W.

### [Variants of second embodiment]

Although the second embodiment illustrates an example in which the outlet 60a of the spray 60B is positioned such that the movement direction F in which the processing machine main body 2 moves relative to the workpiece W during the cutting process intersects the direction of ejection of the spray material E, this configuration is not limiting. For example, the outlet 60a of the spray 60B may be positioned such that the spray material E is ejected along the movement direction F as in the first embodiment. Dross deposited at both edges of the cut G3 can be blown off even when the position of the outlet 60a of the spray 60B is such that the movement direction F and the direction of ejection of the spray material E do not intersect. In this case, the spray 60B may include two or more outlets 60a, or the outlet 60a may be designed with a wide opening, to efficiently blow off dross deposited at both edges of the cut G3.

Although the second embodiment illustrates an example in which the spray 60B includes a single nozzle 61, the spray 60B may include two or more nozzles 61. There are no particular limitations on the arrangement of the nozzles 61 and their outlets 60a; they may be arranged in any manner, provided that the spray material E can be ejected toward the predetermined zone A1.

Although the second embodiment illustrates a configuration in which the processing machine main body 2B functions as a carriage, a separate carriage may be configured independently of the processing machine main body 2B as in the first embodiment, and the processing machine main body 2B may be detachably mounted to the carriage.

Although the second embodiment illustrates a configuration in which the processing machine main body 2B is moved on the rail R by drive power of the wheels 5, the processing machine main body 2B may be configured, as in the first embodiment, to move along the rail R using drive power of the drive roller 11 constituting a part of the rail holder 9 holding the rail R.

Although the second embodiment illustrates an example in which the outlet 60a of the spray 60B is located in the direction in which the second surface S2 of the workpiece W faces (the second surface S2 is opposite to the first surface S1 facing the torch 21), the configuration of the second embodiment is also applicable in other cases where the outlet 60a of the spray 60B is located in the direction in which a surface of the workpiece W faces, as long as that surface is other than the first surface S1 and intersects the imaginary straight line extending from the tip 21a of the torch 21 toward the workpiece W.

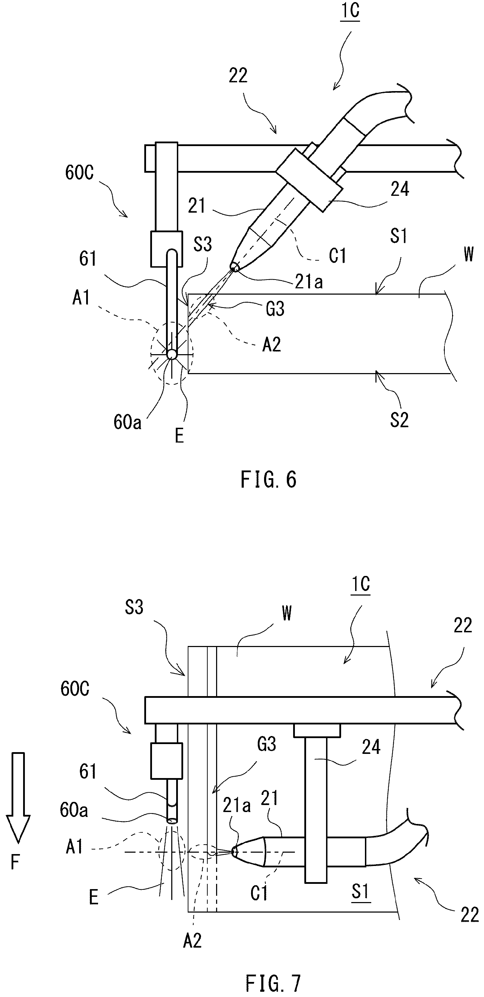

FIG. 6 shows a schematic configuration of a processing machine according to a variant of the second embodiment as viewed in the direction in which the processing machine main body moves relative to the workpiece. FIG. 7 is a plan view of the processing machine shown in FIG. 6. In this variant, components that are the same as those of the second embodiment are denoted by the same reference signs, and a further description of these components may be omitted. In FIGS. 6 and 7, the processing machine main body 2B is not shown. For example, the processing machine main body 2B may have the same configuration as in the second embodiment.

In the processing machine 1C of the present variant, the torch 21 is positioned to cut an edge of the workpiece W diagonally in order to form a weld groove at the edge of the workpiece W. For this purpose, the torch 21 is held by the holder 22 in such a manner that the torch 21 is tilted with respect to the first surface S1 of the workpiece W and oriented in a direction intersecting the movement direction F in which the processing machine main body 2B moves relative to the workpiece W. In other words, the torch 21 is positioned such that the imaginary straight line, which is an extension of the central axis C1, intersects both the first surface S1 of the workpiece W and its side surface S3 intersecting the first surface S1.

In the present variant, a spray 60C is also held by the holder 22. The outlet 60a of the spray 60C is located in the direction in which the side surface S3 faces. Furthermore, in the present variant, the outlet 60a of the spray 60C is located behind the tip 21a of the torch 21 in the movement direction F, and the spray 60C is configured to eject the spray material E forward in the movement direction F.

Also in the present variant, a plasma arc is formed between the tip 21a of the torch 21 and the portion of the workpiece W that lies on an extension of the central axis C1 of the torch 21. The formed plasma arc melts part of the to-be-processed portion A2 of the workpiece W into dross. **In** the thermal processing of the present variant, the plasma arc penetrates the entire thickness of the to-be-processed portion A2 of the workpiece W, so that dross is deposited or about to be deposited around or below the to-be-processed portion A2 on the side surface S3 of the workpiece W.

**In** the present variant, the portion of the workpiece that is above the edges of the cut G3 becomes unnecessary after the thermal processing, or is lost due to being melted by the plasma arc. Thus, the predetermined zone A1 is defined as a zone including a region below the edges of the cut G3 formed in the to-be-processed portion A2. The spray 60C ejects the spray material E toward the predetermined zone A1 defined in this manner. **In** the present embodiment, as shown in FIG. 6, the outlet 60a of the spray 60B is positioned such that the central axis of the outlet 60a is located below the imaginary straight line extending from the tip 21a of the torch 21 toward the to-be-processed portion A2 of the workpiece W, that is, below an extension of the central axis C1 of the torch 21.

The predetermined zone A1 may be defined as a zone including regions both above and below the edges of the cut G3 formed in the to-be-processed portion A2. In this case, the outlet 60a of the spray 60B may be positioned such that the central axis of the outlet 60a intersects the imaginary straight line extending from the tip 21a of the torch 21 toward the to-be-processed portion A2 of the workpiece W.

As a result of ejection of the spray material E from the spray 60C toward the predetermined zone A1, dross generated around the predetermined zone A1 is blown sideways. Even when dross is deposited on a site within the predetermined zone A1, the dross is blown off by the spray material E before cooling on and adhering to that site of the workpiece W. Accordingly, by ejecting the spray material E toward the side surface S3 of the workpiece W while performing thermal processing on the to-be-processed portion A2 of the workpiece W, dross deposition on the side surface S3 of the workpiece W during the hole-forming or cutting process can be prevented.

Although the present variant illustrates an example in which the direction of ejection from the spray 60C extends along the movement direction F of the processing machine main body 2B, the direction of ejection from the spray 60C may be vertical. The direction of ejection from the spray 60C may be an oblique direction having both a component in the movement direction and a vertical component.

### [Other embodiments]

Although the foregoing has described embodiments of the present disclosure, the present disclosure is not limited to the embodiments described above, and various modifications, changes, or alterations can be made without departing from the gist of the disclosure.

For example, although the thermal processing illustrated in the above embodiments is plasma processing in which a plasma arc is generated between the tip 21a of the torch 21 and the to-be-processed portion A2 of the workpiece W, various other processing methods may be employed in which the workpiece W is processed using a heat source generated between the tip 21a of the torch 21 and the to-be-processed portion A2 of the workpiece W. In other words, the teachings of the present disclosure are applicable to any processing machine that uses a processing method in which dross is generated. For example, the teachings of the present disclosure can be applied to a processing machine that performs thermal processing by emitting a gas, a laser bean, or an electron beam from the torch 21 instead of using plasma, and such a processing machine can achieve the effects as described above.

Although the above embodiments illustrate examples in which the spray 60 or 60B is held on the processing machine main body 2 or 2B, the spray 60 or 60B may be configured separately from the processing machine main body 2 or 2B. In this case, the position of the spray 60 or 60B, or its outlet 60a, is shifted to maintain the positional relationship between the outlet 60a and the predetermined zone A1 in accordance with the movement of the processing machine main body 2 or 2B. In other words, the spray 60 or 60B and the processing machine main body 2 or 2B may be subjected to cooperative control.

Although the above embodiments illustrate examples in which the processing machine main body 2 or 2B moves along the rail R relative to the workpiece W, this configuration is not limiting. For example, the processing machine main body 2 or 2B may be configured as a robot that includes an arm coupled to a base and having multiple joints. In this case, the holder 22 may be secured to the distal end of the arm, and a robot controller for controlling the robot may move the arm to control the position of the torch 21 secured to the holder 22.

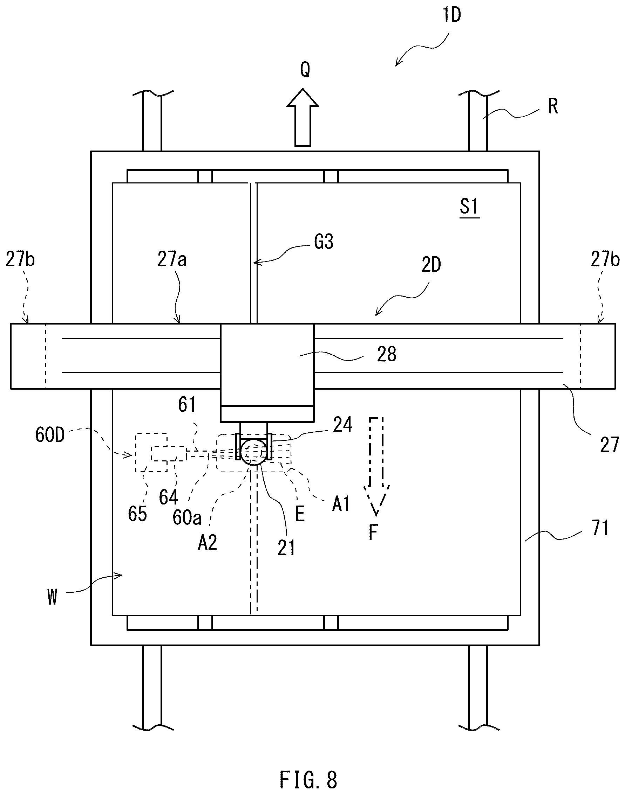

Alternatively, the workpiece W may be moved relative to the processing machine main body 2 or 2B. FIG. 8 is a plan view showing a schematic configuration of a processing machine according to a variant of the present disclosure. In FIG. 8, components that are the same as those of the processing machine 1 or 1B according to the first or second embodiment are denoted by the same reference signs, and a further description of these components may be omitted. Like the processing machine of the second embodiment, the processing machine 1D of the present variant is a working machine that performs a hole-forming or cutting process as thermal processing of the workpiece W.

In this variant, the workpiece W is placed on a workpiece carriage 71. The workpiece carriage 71 is configured to move on the rail R. The workpiece carriage 71 may employ any type of moving structure movable in a movement direction Q in place of the moving structure movable on the rail R.

A processing machine main body 2D is secured to a stationary object such as a ground surface. The processing machine main body 2D includes a first support 27 secured to the stationary object, a second support 28 supported by the first support 27, and a clamp 24 supported by the second support 28. The first support 27 includes: a longitudinal body 27a extending in a direction orthogonal to the movement direction Q of the workpiece carriage 71; and legs 27b located at the opposite ends of the longitudinal body 27a and secured to the stationary object. The longitudinal body 27a has a length greater than the width of the workpiece carriage 71. The workpiece carriage 71 is disposed to pass through the gap between the two legs 27b.

The second support 28 is configured to move on the longitudinal body 27a of the first support 27 in a direction orthogonal to the movement direction Q. The clamp 24 holds the torch 21. The clamp 24 is configured to move in the height direction relative to the second support 28.

As the workpiece W is transferred by the workpiece carriage 71 in the movement direction Q relative to the processing machine main body 2D secured to the stationary object, the torch 21 held by the processing machine main body 2C is moved in the movement direction F relative to the workpiece W.

A spray 60D in the present variant is secured to the stationary object such as a ground surface. The spray 60D includes a base 65 secured to the stationary object, a holder 64 supported by the base 65, and a nozzle 61 held by the holder 64. The positional relationship of the outlet 60a of the spray 60C to the torch 21 and the direction of ejection of the spray material E from the outlet 60a are the same as in the second embodiment.

The spray 60D in the present variant can also eject the spray material E toward a predetermined zone A1 which is defined on the second surface S2 of the workpiece W that faces the torch 21 based on the to-be-processed portion A2 of the workpiece W. This ejection enables dross removal, thereby preventing dross deposition on the workpiece W.

Although this variant illustrates an example in which the thermal processing performed includes the hole-forming and cutting processes, the configuration in which the workpiece W is moved relative to the processing machine main body may be applied to the groove-forming process. In this case, the spray may be held on the processing machine main body or may be held separately from the processing machine main body. For example, the spray may be suspended from an upper portion of a building on which the processing machine is installed.

### [Summary of present disclosure]

### [Item 1]

A processing machine according to one aspect of the present disclosure is a processing machine for thermal processing of a workpiece, the processing machine including: a processing machine main body movable relative to the workpiece; a torch that is secured to the processing machine main body and that generates a heat source between a tip of the torch and a portion of the workpiece that is to be processed; and a spray that ejects a spray material toward a first surface of the workpiece that faces the torch to remove dross deposited on a predetermined zone due to the thermal processing, wherein the torch is tilted such that the tip of the torch is located ahead of an opposite end of the torch in a movement direction in which the processing machine main body moves relative to the workpiece during the thermal processing, an outlet of the spray is located in a direction in which the first surface of the workpiece faces, the outlet of the spray is located ahead of the tip of the torch in the movement direction, the spray ejects the spray material forward in the movement direction, and the processing machine forms a groove on the first surface of the workpiece by performing the thermal processing while moving the processing machine main body.

With this configuration, during the thermal processing in which dross is generated on the first surface of the workpiece, the dross approaching the predetermined zone is blown off by the spray material ejected from the spray toward the predetermined zone. Even when dross is deposited on a site within the predetermined zone, the dross is blown off by the spray material before cooling on and adhering to that site of the workpiece. Accordingly, by ejecting the spray material toward the first surface of the workpiece while performing thermal processing on the to-be-processed portion of the workpiece, dross deposition on the first surface of the workpiece W during the groove-forming process can be prevented.

Furthermore, in the configuration where the spray material is ejected forward in the movement direction from the outlet located as described above, the nozzle of the spray, the spray material ejected from the outlet, and dross blown off by the spray material can be prevented from interfering with the plasma arc. Accordingly, dross removal can be accomplished without affecting the thermal processing.

### [Item 2]

In the processing machine according to item 1, the spray may include a pair of left and right nozzles located to the left and right of the torch. This configuration enables the spray material to efficiently blow off dross.

### [Item 3]

The processing machine according to item 1 may include a tracking roller that is supported by the processing machine main body and that allows the processing machine main body to track a groove formed behind the torch in the movement direction. This configuration enables the processing machine to reliably track the groove formed by the thermal processing. Thus, the processing machine can be moved stably on the workpiece. Accordingly, automation of the groove-forming process can be facilitated.

### [Item 4]

A processing machine according to another aspect of the present disclosure is a processing machine for thermal processing of a workpiece, the processing machine including: a processing machine main body; a torch that is secured to the processing machine main body and that generates a heat source between a tip of the torch and a portion of the workpiece that is to be processed; and a spray that ejects a spray material toward a predetermined zone to remove dross deposited on the predetermined zone due to the thermal processing, the predetermined zone being defined on a surface of the workpiece based on the to-be-processed portion of the workpiece, the surface of the workpiece being a surface that is other than a first surface facing the torch and that intersects an imaginary straight line extending from the tip of the torch toward the to-be-processed potion of the workpiece.

With this configuration, during thermal processing in which dross is generated on the surface of the workpiece other than the first surface, the dross approaching the predetermined zone is blown off by the spray material ejected from the spray toward the predetermined zone. Even when dross is deposited on a site within the predetermined zone, the dross is blown off by the spray material before cooling on and adhering to that site of the workpiece. Accordingly, by ejecting the spray material toward the surface of the workpiece other than the first surface while performing thermal processing on the to-be-processed portion of the workpiece, dross deposition on the surface of the workpiece W other than the first surface during the groove-forming process can be prevented.

### [Item 5]

In the processing machine according to item 4, an outlet of the spray may be located in a direction in which the surface of the workpiece other than the first surface faces, and the outlet of the spray may be positioned such that the imaginary straight line extending from the tip of the torch toward the to-be-processed portion of the workpiece intersects a direction of ejection of the spray material. With this configuration, dross deposited on both sides of the formed groove or around the formed hole on the surface of the workpiece other than the first surface can be blown off all at once. Consequently, efficient dross removal can be achieved.

### [Item 6]

In the processing machine according to item 4 or 5, the processing machine main body may be movable relative to the workpiece, and an outlet of the spray may be positioned such that a movement direction in which the processing machine main body moves relative to the workpiece during the thermal processing intersects a direction of ejection of the spray material. This configuration makes it possible to efficiently blow off dross generated on a second surface of the workpiece.

### [Item 7]

In the processing machine according to any one of items 4 to 6, the torch may be positioned such that the imaginary straight line intersects the first surface of the workpiece and a second surface of the workpiece that is opposite to the first surface, and an outlet of the spray may be directed toward the second surface.

### [Item 8]

In the processing machine according to any one of items 4 to 7, the torch may be positioned such that the imaginary straight line intersects the first surface of the workpiece and a side surface of the workpiece that intersects the first surface, and an outlet of the spray may be directed toward the side surface.

### [Item 9]

In the processing machine according to any one of items 1 to 8, the outlet of the spray may have a shape extending longitudinally in a direction parallel to a surface of the workpiece. This configuration allows for an increased speed of the spray material ejected from the outlet. In addition, the spray material can be ejected over a wide range in the width direction.

### [Item 10]

A processing method according to another aspect of the present disclosure is a processing method for thermal processing of a workpiece, the processing method including: holding a torch that generates a heat source between a tip of the torch and a portion of the workpiece that is to be processed, with the torch directed toward the to-be-processed portion of the workpiece; performing the thermal processing on the to-be-processed portion of the workpiece by generating the heat source, and simultaneously ejecting a spray material toward a first surface of the workpiece that faces the torch to remove dross deposited on a predetermined zone due to the thermal processing; forming a groove on the first surface of the workpiece by performing the thermal processing while moving the torch relative to the workpiece; and ejecting the spray material from a location that is in a direction in which the first surface of the workpiece faces and that is ahead of the tip of the torch in a movement direction in which the torch moves relative to the workpiece, wherein the spray material is ejected forward in the movement direction.

### [Item 11]

A processing method according to another aspect of the present disclosure is a processing method for thermal processing of a workpiece, the processing method including: holding a torch that generates a heat source between a tip of the torch and a portion of the workpiece that is to be processed, with the torch directed toward the to-be-processed portion of the workpiece; and performing the thermal processing on the to-be-processed portion of the workpiece by generating the heat source, and simultaneously ejecting a spray material toward a predetermined zone to remove dross deposited on the predetermined zone due to the thermal processing, the predetermined zone being defined on a surface of the workpiece based on the to-be-processed portion of the workpiece, the surface of the workpiece being a surface that is other than a first surface facing the torch and that intersects an imaginary straight line extending from the tip of the torch toward the to-be-processed potion of the workpiece.

## Claims

1. A processing machine for thermal processing of a workpiece, the processing machine comprising:
a processing machine main body movable relative to the workpiece;
a torch that is secured to the processing machine main body and that generates a heat source between a tip of the torch and a portion of the workpiece that is to be processed; and
a spray that ejects a spray material toward a first surface of the workpiece that faces the torch to remove dross deposited on a predetermined zone due to the thermal processing, wherein
the torch is tilted such that the tip of the torch is located ahead of an opposite end of the torch in a movement direction in which the processing machine main body moves relative to the workpiece during the thermal processing,
an outlet of the spray is located in a direction in which the first surface of the workpiece faces,
the outlet of the spray is located ahead of the tip of the torch in the movement direction,
the spray ejects the spray material forward in the movement direction, and
the processing machine forms a groove on the first surface of the workpiece by performing the thermal processing while moving the processing machine main body.

2. The processing machine according to claim 1, wherein
the spray includes a pair of left and right nozzles located to the left and right of the torch.

3. The processing machine according to claim 1, further comprising a tracking roller that is supported by the processing machine main body and that allows the processing machine main body to track a groove formed behind the torch in the movement direction.

4. A processing machine for thermal processing of a workpiece, the processing machine comprising:
a processing machine main body;
a torch that is secured to the processing machine main body and that generates a heat source between a tip of the torch and a portion of the workpiece that is to be processed; and
a spray that ejects a spray material toward a predetermined zone to remove dross deposited on the predetermined zone due to the thermal processing, the predetermined zone being defined on a surface of the workpiece based on the to-be-processed portion of the workpiece, the surface of the workpiece being a surface that is other than a first surface facing the torch and that intersects an imaginary straight line extending from the tip of the torch toward the to-be-processed potion of the workpiece.

5. The processing machine according to claim 4, wherein
an outlet of the spray is located in a direction in which the surface of the workpiece other than the first surface faces, and
the outlet of the spray is positioned such that the imaginary straight line extending from the tip of the torch toward the to-be-processed portion of the workpiece intersects a direction of ejection of the spray material.

6. The processing machine according to claim 4, wherein
the processing machine main body is movable relative to the workpiece, and
an outlet of the spray is positioned such that a movement direction in which the processing machine main body moves relative to the workpiece during the thermal processing intersects a direction of ejection of the spray material.

7. The processing machine according to claim 4, wherein
the torch is positioned such that the imaginary straight line intersects the first surface of the workpiece and a second surface of the workpiece that is opposite to the first surface, and
an outlet of the spray is located in a direction in which the second surface faces.

8. The processing machine according to claim 4, wherein
the torch is positioned such that the imaginary straight line intersects the first surface of the workpiece and a side surface of the workpiece that intersects the first surface, and
an outlet of the spray is located in a direction in which the side surface faces.

9. The processing machine according to any one of claims 1 to 8, wherein
the outlet of the spray has a shape extending longitudinally in a direction parallel to a surface of the workpiece.

10. A processing method for thermal processing of a workpiece, the processing method comprising:
holding a torch that generates a heat source between a tip of the torch and a portion of the workpiece that is to be processed, with the torch directed toward the to-be-processed portion of the workpiece;
performing the thermal processing on the to-be-processed portion of the workpiece by generating the heat source, and simultaneously ejecting a spray material toward a first surface of the workpiece that faces the torch to remove dross deposited on a predetermined zone due to the thermal processing;
forming a groove on the first surface of the workpiece by performing the thermal processing while moving the torch relative to the workpiece; and
ejecting the spray material from a location that is in a direction in which the first surface of the workpiece faces and that is ahead of the tip of the torch in a movement direction in which the torch moves relative to the workpiece, wherein the spray material is ejected forward in the movement direction.

11. A processing method for thermal processing of a workpiece, the processing method comprising:
holding a torch that generates a heat source between a tip of the torch and a portion of the workpiece that is to be processed, with the torch directed toward the to-be-processed portion of the workpiece; and
performing the thermal processing on the to-be-processed portion of the workpiece by generating the heat source, and simultaneously ejecting a spray material toward a predetermined zone to remove dross deposited on the predetermined zone due to the thermal processing, the predetermined zone being defined on a surface of the workpiece based on the to-be-processed portion of the workpiece, the surface of the workpiece being a surface that is other than a first surface facing the torch and that intersects an imaginary straight line extending from the tip of the torch toward the to-be-processed potion of the workpiece.
